# EUROPÄISCHE PATENTANMELDUNG

(11) **EP 4 235 981 A1**
(43) Veröffentlichungstag der Anmeldung: **30.08.2023**
(21) Anmeldenummer: 23153013.0
(22) Anmeldetag: 24.01.2023
(51) Int. Cl.: H01R 31/06

(54) **ADAPTERKABEL UND VERFAHREN ZUM BETRIEB VON ELEKTRONISCHEN SYSTEMKOMPONENTEN**

(30) Priorität: 25.02.2022 DE 102022104522
(71) Anmelder: Turck Holding GmbH, 58553 Halver (DE)
(72) Erfinder: Becker, Friedrich, 32657 Lemgo (DE)
(74) Vertreter: DTS Patent- und Rechtsanwälte Schnekenbühl und Partner mbB

(57) **Zusammenfassung**

Die vorliegende Erfindung betrifft ein Adapterkabel zur strom- und datenleitenden Verbindung von zwei elektronischen Systemkomponenten aus zwei unterschiedlichen Kommunikationssystemen, umfassend ein zwei Verbindungselemente, die durch ein zwei- oder mehradriges Verbindungskabel miteinander strom- und/oder datenleitend verbunden sind, wobei beide Verbindungselemente, einen Steckerkörper, ein Kontaktelement und eine Kabeleinführung für das jeweilige Ende des Verbindungskabels aufweisen, wobei das erste und zweite Verbindungselement jeweils eine Konvertierungseinheit aufweist. Hierbei ist die erste Konvertierungseinheit des ersten Verbindungselementes derart ausgelegt und umfasst entsprechende erste elektronische Bauteile, damit ein erster Teil der Daten- und/oder Leistungskonvertierung vorgenommen werden kann und die zweite Konvertierungseinheit des zweiten Verbindungselementes ist analog so ausgelegt und umfasst entsprechende weitere elektronische Bauteile, das ein zweiter Teil der Daten- und/oder Leistungskonvertierung vorgenommen werden kann. Weiterhin ist von der Erfindung ein Verfahren zum Betrieb von elektronischen Systemkomponenten aus zwei unterschiedlichen Kommunikationssystemen umfasst, wobei das vorgenannte Adapterkabel als Verbindungsmittel verwendet wird.

## Beschreibung

Die vorliegende Erfindung betrifft ein Adapterkabel nach dem Oberbegriff des Anspruchs 1 und ein Verfahren zum Betrieb von elektronischen Systemkomponenten nach dem Oberbegriff des Anspruchs 10.

Mittels lösbarer Verbindungselemente kann eine elektrische oder optische Verbindung zwischen einem Datenübertragungskabel und einem Gegenverbindungselement, wie einer Anschlussbuchse, hergestellt und wieder gelöst werden. Diese sind in fast jeder Polanzahl bekannt, wobei aus der EP 2 359 441 B1 beispielsweise ein 8-poliges Verbindungselement bekannt ist.

Innerhalb jeder Kommunikations- und Versorgungstechnologie haben sich neben herstellereigenen Festlegungen, allgemeine Normen- und Standards herausgebildet, welche Dimensionierungen und sicherheitsrelevante Vorgaben definieren. Im Bereich der Datenbus-Technologie, wie beispielsweise PoDL (Power over Data Line), SPE (Single Pair Ethernet), TPE (Twisted Pair Ethernet), sind asynchrone Verbindungselement ebenfalls bekannt, deren zugehörige Verbindungselemente gemäß unterschiedlicher Normen, wie beispielsweise der IEC 60603-7-5, ausgebildet sind. Ausführungsformen von Verbindungselementen, die diese Norm aufgreifen sind beispielsweise aus der DE 10 2017 101 544 B3 bekannt, welche ein Verbindungselement mit einem Rastelement offenbart, das an einem Festlager und einem Loslager gehalten ist. Ein vergleichbares Verbindungselement ist aus der DE 10 2019 131 596 B3 bekannt, bei welchem durch das Verbindungselement eine vorteilhafte, sichere formschlüssige Verbindung mit dem Gegenverbindungselement ermöglicht wird.

Die zunehmende Entwicklung der Automatisierungstechnik führt einerseits für dieselbe Übertragungstechnologie, wie dem vorgenannten SPE, zu mehreren genormten, aber dennoch unterschiedlich aufgebauten Verbindungselementen und weiterhin führt die fortschreitende Miniaturisierung zu hohen Anforderungen bezüglich des Gewichtes und des Platzbedarfes der Verbindungselemente.

Aus der US 2021/0382253 A1 ist bekannt, an einer Steckerseite eines Verbindungskabels zur Konvertierung von strombasierten Daten in optische Signale, eine Platine als Teil eines Steckergehäuses vorzusehen. Weiterhin ist aus der US 6 386 919 B2 ein Übertragungskabel mit einem Schnittstellenwandler zum Umwandeln von Datensignalen von einem ersten Übertragungsmedium in ein zweites

Übertragungsmedium und dessen spezifischen Anforderungen bekannt. Dieser Schnittstellenwandler ist in einem Gehäuse untergebracht und weist eine gedruckte Leiterplatte mit elektronischen Schaltungen innerhalb des Gehäuses auf. Diese sind derart konfiguriert, dass Datensignale von einem Host-Geräteübertragungsmedium in ein zweites Übertragungsmedium umgewandelt werden können.

Schließlich ist aus der DE 10 2013 207 940 A1 ein Steckverbinder bekannt, der im Steckerkörper ein oder mehrere elektronische Komponenten mit einem integrierten Schaltkreis umfasst, welcher mit Identifikations- und Konfigurationsinformationen über den Steckverbinder programmiert ist. Diese können während des Verbindens an ein Gerät kommuniziert werden. Hierbei kann der Schaltkreis einen sogenannten Handshake-Algorithmus umfassen oder daran beteiligt sein, der die Funktion eines oder mehrerer Kontakte an eine Hostvorrichtung kommuniziert, mit der der Steckverbinder verbunden ist.

An den vorbekannten Lösungen ist nachteilig, dass die Variantenvielfalt der möglichen Verbindungselement für die Betreiber von bestehenden Anlagen und Fertigungsprozessen, die bereits ein spezielles Daten-Bussystem einsetzen, die Kombination mit einem alternativen Bussystem aufwändige Konverter für Daten und/oder Stromversorgung erfordert. Auch für Herstellern von Elektronikbauteilen ist es sehr aufwändig, da für die Vielzahl möglicher Systemkombinationen eine umfangreiche Lagerhaltung und/oder Bauraum an den Elektronikkomponenten erfordert ist. Ein weiterer Nachteil ist, dass die bekannten, starren Adapter nur eine mechanisch instabile Lösung bieten. Der Adapter muss weiterhin beim Wechsel der Ankopplung neu erstellt oder ebenfalls vollständig ausgetauscht werden.

Es ist die Aufgabe der vorliegenden Erfindung ein verbessertes Konverter- und Verbindungselement zur Verfügung zu stellen, welches die vorgenannten Nachteile im Stand der Technik weitestgehend vermeidet.

Diese Aufgabe wird erfindungsgemäß gelöst durch ein Adapterkabel nach den Merkmalen des Anspruchs 1 und einem Verfahren zum Betrieb von elektronischen Systemkomponenten nach den Merkmalen des Anspruches 10. Vorteilhafte Ausgestaltungen sind in den jeweiligen, zugehörigen Unteransprüchen angegeben.

Danach wird die Aufgabe gelöst durch ein Adapterkabel zur strom- und datenleitenden Verbindung von zwei elektronischen Systemkomponenten aus zwei unterschiedlichen Kommunikationssystemen, umfassend ein erstes Verbindungselement und eine zweites Verbindungselement, die durch ein zwei- oder mehradriges (mehrdrahtiges) Verbindungskabel miteinander strom- und datenleitend verbunden sind, wobei beide Verbindungselemente
- einen Steckerkörper, ein Kontaktelement und eine Kabeleinführung für das jeweilige Ende des Verbindungskabels aufweisen. Hierbei weist das erste Verbindungselement eine erste Konvertierungseinheit auf und das zweite Verbindungselement weist eine zweite Konvertierungseinheit auf, wobei
- die erste Konvertierungseinheit des ersten Verbindungselementes ausgelegt ist und entsprechende erste elektronische Bauteile umfasst, um einen ersten Teil der Daten- und/oder Leistungskonvertierung für mindestens eines der Kommunikationssysteme vorzunehmen und
- die zweite Konvertierungseinheit des zweiten Verbindungselementes ist ausgelegt und umfasst entsprechende weitere elektronische Bauteile, um einen zweiten Teil der Daten- und/oder Leistungskonvertierung vorzunehmen.

Die Kommunikationssysteme sind hierbei beispielsweise
- unterschiedliche Feld-/Datenbussysteme (IO-Link, SPE, CAN-Bus, Ethernet etc.),
- unterschiedliche Übertragungsarten, wie Point-to-Point oder Mulitdrop etc.,
- separierte oder kombinierte Daten- und Leistungsübermittlung, wie PoDL, IIoT etc.,
- unterschiedliche Datenformate, wie digitale Daten, analoge Daten etc. und/oder
- physikalisch unterschiedliche Datenformate, wie elektrische Signale, Funksignale, Lichtsignale etc.

Hierbei meint erstes oder zweites "Verbindungselement" einen finger- oder pinartigen Verbindungsstecker oder einen buchsenartigen Verbindungsstecker. Die vorliegende Erfindung ist in dieser Hinsicht nicht limitiert auf die Bauform des jeweiligen Verbindungselementes. Weiterhin meint in analoger Weise "Kontaktelement" das jeweilige zugehörige zentrale daten- und stromleitende Element, wobei auch hier gleichermaßen ein Finger-, Pin- oder Buchsenkontaktelement gemeint sein kann, wenn nicht ausdrücklich etwas Konkretisierendes ausgeführt wird.

Mit anderen Worten, es wird die erforderliche Konvertierungselektronik in zwei Bauteile oder funktionale Verbindungsstecker aufgeteilt und mit einem zwei oder mehradrigen Verbindungskabel verbunden. Durch diese verkleinerte, asynchrone Elektronik in oder unmittelbar an jedem Stecker in Verbindung mit dem flexiblen Verbindungskabel, können insbesondere Feldgeräte (Aktoren, Sensoren) leichter mit einer übergeordneten Systemkomponente verbunden und leicht getauscht werden.

Bei einer verbesserten Ausführungsform, ist zwischen der ersten und dem zweiten Konvertierungseinheit und gemeinsam mit der Verbindungsleitung ein drittes Kommunikationssystem gebildet, welches hinsichtlich der ausgetauschten Signale sowohl unterschiedliche ist zu dem ersten als auch dem zweiten Kommunikationssystem.

Bei einer vorteilhaften Ausführungsform kann vorgesehen sein, dass die durch die Adern des Verbindungskabels laufenden Signale keinem der verbundenen Kommunikationstypen beziehungsweise deren Standardsignale in identischer Art und Weise entsprechen, sondern sich wenigstens um ein Merkmal unterscheiden, wie beispielsweise Datenformat/-geschwindigkeit, Leitungsart, Anzahl und/oder Aufteilung der Übertragungsadern etc. Somit kann beispielsweise ein SPE-Datensignal in einem Verbindungselement lediglich von seinem DC-Anteil getrennt werden, wobei beispielsweise die eigentliche Kodierung bestehen bleibt und nicht weiter umgewandelt wird.

Vorliegend soll unter "Signal" Daten-, Mess- und Informationssignale jeglicher Art und elektrischer Strom bzw. elektrische Leistung verstanden werden.

Eine weiter verbesserte Ausführungsform des Adapterkabels besteht darin, dass sich die erste und die zweite Konvertierungseinheit des ersten und des zweiten Verbindungselementes zum Zwecke einer vollständigen Daten- und/oder Leistungskonvertierung für zwei Kommunikationssysteme (vollständig) komplementär ergänzen. Dies bedeutet, dass jedes für die Konvertierung der Signale zwischen dem ersten und dem zweiten Kommunikationssystem erforderliche Element nur einfach auf oder an einer der Konvertierungseinheiten vorgesehen ist, und sie nur gemeinsam mit den jeweils erforderlichen Adern des Verbindungskabels eine voll funktionsfähige Konvertierungseinheit darstellen.

Eine vorteilhafte Ausführungsform des Adapterkabels besteht darin, dass die erste und die zweite Konvertierungseinheit des ersten und des zweiten Verbindungselementes jeweils einen PHY, eine Mikroprozessoreinheit (CPU) und einen Gleichstromwandler umfassen, die von dem ggf. standardisierten (genormten) Stecker definiert werden. So weist beispielsweise das Verbindungselement mit einem IOL-Stecker/-Kontakt auch einen IOL PHY auf, ein Verbindungselement mit einem (genormten) SPE-Stecker/Kontaktelement eine SPE-PHY und ein Verbindungselement mit einem CAN-Stecker/Kontaktelement einen CAN-PHY.

Eine weiter verbesserte Ausführungsform des Adapterkabels besteht darin, dass an oder in mindestens einem der Steckerkörper ein physikalischer Sensor angeordnet ist, welcher datenleitend mit einer der Konvertierungseinheiten und mindestens einem der dortigen elektronischen Bauteile verbunden ist, wobei die Messwerte und/oder -daten des physikalischen Sensors derart durch die Konvertierungseinheiten konvertierbar sind, dass diese an mindestens ein, idealerweise an beide Kommunikationssysteme übermittelbar sind. Der physikalische Sensor meint, dass ein physikalischer Wert oder eine physikalische Größe messbar ist, wie beispielsweise die Temperatur (Temperatursensor), die mechanischen Einflüsse (Erschütterungssensors-, Neigungs- und/oder Schwingungssensor), Stromfluss (Stromsensor) oder eine Annäherung bzw. Kontakt (Näherungssensor, bspw. induktiver Näherungssensor).

Eine alternative oder zusätzliche Verbesserung besteht darin, dass an oder in mindestens einem der Steckerkörper eine Datenerfassungseinheit angeordnet ist, welche datenleitend mit einer der Konvertierungseinheiten und mindestens einem der dortigen elektronischen Bauteile verbunden ist, wobei die gemessenen und erfassten Datenwerte der Datenerfassungseinheit derart durch die Konvertierungseinheiten konvertierbar sind, dass diese an mindestens eines der Kommunikationssysteme, idealerweise an beide, übermittelbar sind.

Die Datenerfassungseinheit ist ausgebildet und dient zur Erfassung von datenrelevanten Messwerten und Größen, die beispielsweise die übertragene Datenmenge, Senderichtung/-folge und/oder deren Taktung, wobei diese unabhängig von den angeschlossenen elektronischen Systemkomponenten erfasst werden.

Im den beiden vorgenannten Fällen eines physikalischen Sensors und/oder einer Datenerfassungseinheit kann eines der bestehenden elektronischen Bauteile einer Konvertierungseinheit die Messdaten und/oder -werte empfangen und in geeigneter Weise für mindestens eines der beiden Kommunikationssysteme konvertieren (übersetzen) und weiterleiten, wobei ggf. eine Mikroprozessoreinheit organisierend beteiligt ist. Alternativ kann ein zusätzlicher PHY oder Schaltkreis (PCB) vorgesehen sein, um die Messdaten und/oder -werte in geeigneter Weise aufzubereiten und weiterzuleiten, beispielsweise auf einen Stromfluss als Amplitude aufprägen.

Bei einer verbesserten Ausführungsform ist ein Speichermedium in einem Steckerkörper und/oder auf einer der Konvertierungseinheiten vorgesehen, in welchem mindesten temporär die Messdaten und/oder -werte speicherbar sind.

Eine weiter verbesserte Ausführungsform des Adapterkabels kann darin bestehen, dass das Kontaktelement des jeweiligen Verbindungselementes und/oder dessen Steckerkörper normiert sind, gemäß dem jeweiligen Kommunikationssystem, wobei die Steckerkörper und die zugehörigen Kontaktelemente als Steckfinger oder Steckbuchse ausgebildet sein können, wobei die Kontaktelemente insbesondere genormt sind nach einer der Unternormen der DIN IEC 63171-x oder 611131 -x.

Eine bevorzugte Ausführungsform sieht vor, dass das erste Konvertierungselement des ersten Verbindungselementes einen Stromkonverter umfasst oder diesen darstellt, insbesondere einen Gleichstromkonverter und einen Schwingungskonverter, und wobei das zweite Konvertierungselement des zweiten Verbindungselements einen Datenkonverter umfasst oder diesen darstellt, insbesondere einen ersten Physical Layer (PHY) des ersten Kommunikationssystems und einen zweiten Physical Layer (PHY) des zweiten Kommunikationssystems umfasst, und insbesondere eine hiermit verbundene und organisierende Mikroprozessoreinheit (µC) umfasst.

Der PHY (Physical Layer) ist hierbei eine Hardwarekomponente mit mindestens einem integrierten Schaltkreis. Er bildet das Verbindungselement oder Interface zwischen einem physikalischen Medium, wie einem Stecker und/oder einem Verbindungskabel einerseits und andererseits den digitalen Daten. Eine PHY umfasst typischerweise einen Physical Medium Attachment (PMA)-Sublayer, einen Forward Error Correction (FEC)-Sublayer sowie einen Physical Coding Sublayer (PCS).

Diese Ausführungsform kann dahingehend weiter verbessert werden, dass das zweite Konvertierungselement des zweiten Verbindungselementes einen weiteren Spannungskonverter umfasst, welcher mit dem Spannungsniveau des zweiten Kommunikationssystems korreliert bzw. hiervon definiert wird, und wobei der weitere Spannungskonverter über mindestens zwei Adern des Verbindungskabels mit dem Spannungskonverter des ersten Konvertierungselements direkt verbunden ist.

Bei einer Ausführungsform, insbesondere bei einem angeschlossenen analogen Sensor, kann vorgesehen sein, dass mindestens eine der Konvertierungseinheiten einen Analog-Digital-Konverter (ADC) umfasst. Dieser arbeitet idealerweise mit einer ebenfalls vorgesehenen Mikroprozessoreinheit zusammen, wobei vorteilhafterweise ein Speichermedium vorgesehen ist, in welches mindestens zeitweise Messdaten abgelegt werden können.

Von der Erfindung ist weiterhin ein Verfahren zum Betrieb von elektronischen Systemkomponenten aus zwei unterschiedlichen Kommunikationssystemen umfasst, die insbesondere zwei standardisierte Kommunikationssysteme (Datenbus, Feldbus) sind, wie beispielsweise ein serieller CAN-Bus, eine SPE oder ein IO-Link (IOL). Hierbei ist ein Adapterkabel als Verbindung zwischen jeweils zwei elektronischen Systemkomponenten vorgesehen, die jeweils einem der beiden Kommunikationssysteme zugeordnet sind und gemäß deren Standards und/oder Normen ausgelegt sind und arbeiten. Das Adapterkabel ist dabei nach mindestens einer der vorgenannten Ausführungsformen ausgebildet.

Bei einer vorteilhaften Verfahrensvariante erfolgt ein erster Teil der Konvertierung der Signale an oder in dem ersten Verbindungselement und der zweite Teil der Konvertierung der Signale erfolgt an oder in dem zweiten Verbindungselement. Dies ist bei einer möglichen Variante derart gestaltet, dass in einem Verbindungselement die Konvertierung der elektrischen Leistung und/oder Trennung der auf den Strom aufgeprägten und die Datenübermittlung betreffende Frequenz oder Amplitude erfolgt, wobei auf dem anderen Verbindungselement die Konvertierung der eigentlichen Daten (Informationen) vorgenommen wird, gemäß den jeweiligen Datenprotokollen.

Auch wenn vorliegend vorrangig von CAN-Bus, SPE und/oder IOL und deren Protokollen gesprochen wird, ist dies nicht einschränkend zu verstehen, so dass hierunter auch andere Daten- oder Feldbus-Protokolle beziehungsweise Ethernet-, Funk-, NFC- oder sonstige (Daten-)Protokolle verstanden werden sollen.

Weitere Einzelheiten und Vorteile der Erfindung sollen nun anhand von in den Zeichnungen dargestellten Ausführungsbeispielen näher erläutert werden.

Es zeigen:
- Fig. 1: eine erste Verschaltung und schematische Draufsicht auf das Adapterkabel,
- Fig. 2: eine vertikale Schnittdarstellung einer Ausführungsform analog zur Figur 1,
- Fig. 3: eine zur Fig. 2 alternative, weitere Ausführungsform der Verschaltung,
- Fig. 4: eine weitere Ausführungsform einer Verschaltung und
- Fig. 5: eine zur Fig. 4 alternative, weitere Ausführungsform der Verschaltung.

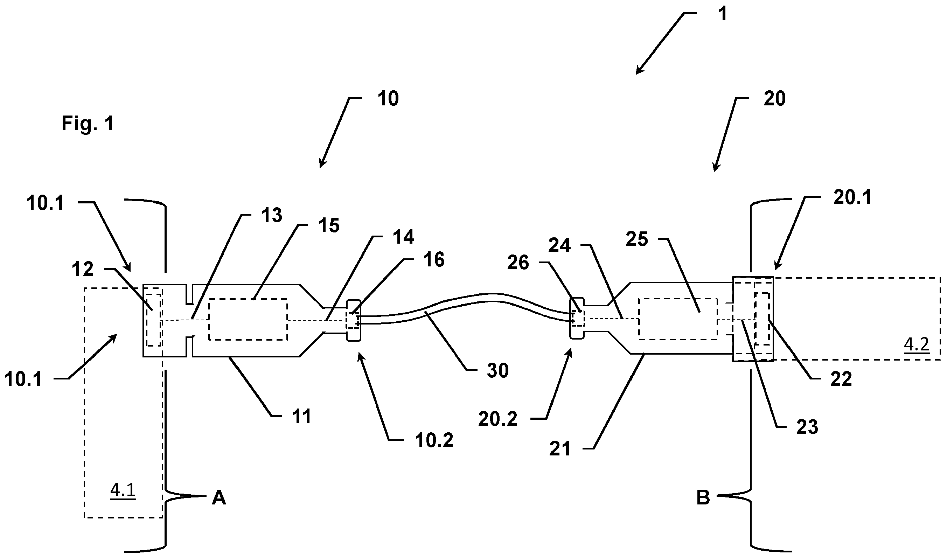

Die Figur 1 zeigt einen schematischen Aufbau eines Adapterkabels 1 zur strom- und datenleitenden Verbindung von zwei elektronischen Systemkomponenten 4.1, 4.2, die aus zwei unterschiedlichen Kommunikationssystemen A, B stammen, wobei die linke Systemkomponente 4.1 bspw. zu einem SPE Kommunikationssystem A gehört und die rechte elektronische Systemkomponente 4.2 bspw. zu einem IO-Link Kommunikationssystem B gehört. Die beiden Systemkomponenten 4.1, 4.2 sind als gestrichelte Linien skizziert dargestellt.

Die Kommunikationssysteme A, B sind durch die geschweiften Klammern angedeutet. Das linke, erste Verbindungselement 10 ist ein nach DIN IEC 63171-5 genormter SPE Steckverbinder und das zweite Verbindungselement 20 ein nach der DIN 611131-9 genormter IOL-Steckverbinder, wobei vorliegend nicht zwischen Steckbuchse und Steckfinger unterschieden wird. Das erste Verbindungselement 10 weist ein Steckende 10.1 sowie ein Kabelende 10.2 auf und das zweite Verbindungselement in analoger Weise auch ein Steckende 20.1 und eine Kabelende 20.2.

Das mehradrige Verbindungskabel 30 verbindet die beiden Verbindungselemente 10, 20 strom- und datenleitend miteinander und ist an den beiden Kabelenden 10.2, 20.2 in den jeweiligen Steckerkörper 11, 21 eingeführt. Weiterhin sind Kontaktelemente 12, 22 vorgesehen, über welche ader- oder phasenweise die eigentliche Weiterleitung von Strom und/oder Daten erfolgt, und jeweils eine Kabeleinführung 16, 26 für das jeweilige Ende des Verbindungskabels 30. Der linke Steckerkörper 10 weist ein nicht dargestelltes Außengewinde auf und ist insgesamt beispielsweise als staub- und nässegeschützter Steckverbinder der Schutzklasse PJ 67 ausgebildet. Der rechte Steckerkörper 20 weist als Verbindungselement eine Überwurfmutter auf und ist beispielsweise als M8-Steckverbinder für IO-Link ausgebildet.

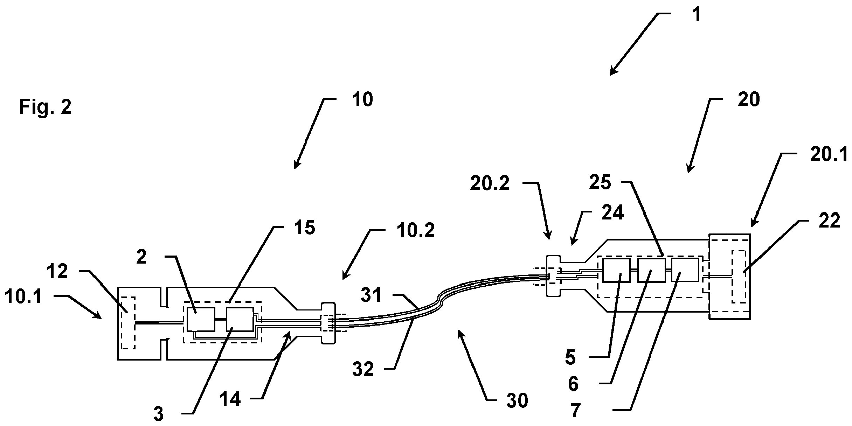

Das erste Verbindungselement 10 weist eine erste als Platine ausgeformte Konvertierungseinheit 15 auf, die über die (innere) Verbindungsleitung 13 mit dem Kontaktelement 13 verbunden ist. Auf der Gegenseite ist die Konvertierungseinheit 15 über die (innere) Verbindungsleitung 14 mit der Kabeleinführung 16 verbunden. Bei einer alternativen, nicht dargestellten Ausführungsform ist das Kontaktelement 12 oder das Kontaktelement 22 unmittelbar auf oder an der jeweiligen Platine befestigt, insbesondere angelötet und/oder die jeweilige Kabeleinführung ist unmittelbar auf oder an der Platine vorgenommen, ohne eine dazwischen angeordnete (innere) Verbindungsleitung. Die auf der Platine bzw. der Konvertierungseinheit 15 angeordneten elektronischen Bauteile sind nachfolgen beispielhaft auch im Zusammenhang mit der Fig. 2 erläutert. In analoger Weise weist das zweite Verbindungselement 20 eine zweite Konvertierungseinheit 25 auf, und die Verbindungsleitung 23 ist mit dem Kontaktelement 22 strom- und datenleitend verbunden. Auf der Gegenseite ist eine Verbindungsleitung 24 hin zur Kabeleinführung 26 vorgesehen. Die erste Konvertierungseinheit 15 des linken, ersten Verbindungselementes 10 ist zur Strom- bzw. Leistungskonvertierung ausgelegt und umfasst die entsprechenden elektronischen Bauteile, wie in der Fig. 2 näher gezeigt. Die linke, zweite Konvertierungseinheit 25 des zweiten Verbindungselementes 20 ist ausgelegt und umfasst entsprechende elektronische Bauteile, um die Datenkonvertierung und Protokollanpassung vorzunehmen.

In dem gezeigten Beispiel nach der Figur 2 erfolgt im Spannungskonverter 2 die Abtrennung des SPE-Signals und im Schwingungskonverter 3 erfolgt die Entfernung des Gleichstromanteils.

Die Figur 2 zeigt weitere Details zur Figur 1 und lässt den asymmetrischen Aufbau des Adapterkabels 1 gut erkennen. In dem linken, ersten Verbindungselement 10 ist auf der Konvertierungseinheit 15 ein Spannungskonverter 2 und ein Schwingungskonverter 3 angeordnet. Auf dem linken, ersten Konvertierungselement erfolgt also die Wandlung von SPE-Daten (PoDL) in Leistungsdaten über den Spannungskonverter 2 (Gleichstrom) und den hiervon unabhängigen und den Datenstrom darstellenden Schwingungsanteil über den Schwingungskonverter 3. Diese so aufgeteilten Signale werden über zwei zweidrahtige Adern 31, 32 zum Konvertierungselement 25 geleitet beziehungsweise einem dortigen IOL PHY 7 und/oder einer Mikroprozessoreinheit 6 (Mikroprozessoreinheit), wo der Transfer in das IOL Protokoll vorgenommen wird. In analoger Weise werden die von der IOL Systemkomponente eingehenden Daten, die beispielsweise über eine dreiadrige Leitung oder einen dreipoligen Kontakt an dem Kontaktelement 22 eingehen, in der SPE PHY 5 und der Mikroprozessoreinheit 6 in das SPE Protokoll konvertiert und insbesondere auf die nur zwei DC-Adern aufgeprägt.

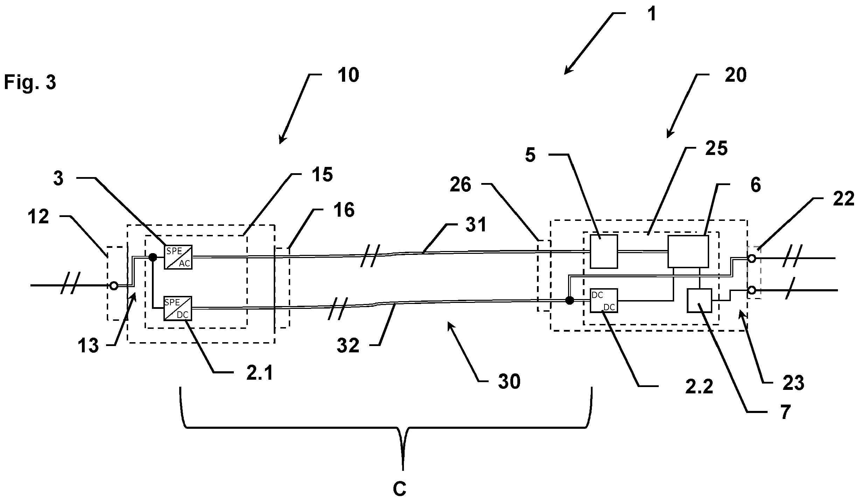

In der Figur 3 ist eine weitere Variante analog zur Figur 2 gezeigt, indem auf der ersten Konvertierungseinheit 15 ein erster Spannungskonverter 2.1 vorgesehen ist, und unterschiedlich zur Fig. 2 in dem zweiten Verbindungselement 20 ein zusätzlicher Gleichstromwandler 2.2 vorgesehen ist, mit dem beispielsweise ein zum SPE Kommunikationssystem A unterschiedliche Spannung vorgesehen werden oder ein Leistungsverlust über ein längeres Verbindungskabel 30 kompensiert werden kann. Der Gleichstromwandler 2.2 versorgt weiterhin die Mikroprozessoreinheit 6 und den IO-PHY 7 mit Spannung. Bei dem Verbindungselement 20 ist der obere Pol ein zweiadriger Leistungsanschluss (PWR) und der untere Pol ist für die einadrige Datenleitung (C/Q) vorgesehen.

In dem gezeigten Beispiel nach der Figur 3 erfolgt im Spannungskonverter 2.1 die Abtrennung des SPE-Signals und im Schwingungskonverter 3 erfolgt die Entfernung des Gleichstromanteils.

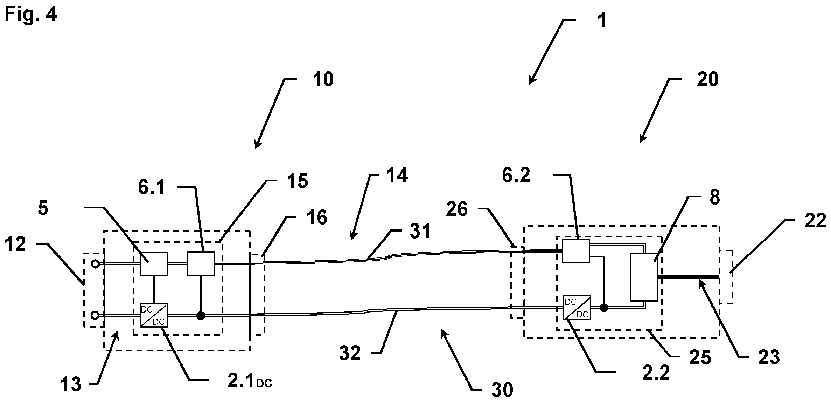

Bei dem Ausführungsbeispiel nach Figur 4 ist das erste Verbindungselement 10 zur Verbindung mit einem seriellen CAN-Bus vorgesehen und das Kontaktelement 12 ist im gezeigten Beispiel 4-polig ausgebildet, wobei zwei Adern mit einem CAN PHY 5 verbunden sind und zwei Adern von den entsprechenden Polen zum ersten Gleichstromwandler 2.1 führen. Weiterhin ist auf dem Konvertierungselemente 15 des ersten Verbindungselements 10 auch eine erste Mikroprozessoreinheit 6.1 (CPU) vorgesehen. Das zweite Verbindungselement 20 dient zur Verbindung mit beispielsweise einer Systemkomponente 4.2 (nicht dargestellt), die als einfacher, endständiger Sensor ausgebildet ist und analoge Messwerte sendet. Diese Systemkomponente 4.2 kann eine zusätzliche eigene Stromversorgung aufweisen und einen weiteren Gleichstromwandler 2.2. Zwei Gleichstromwandler sind immer dann besonders sinnvoll, wenn eine beidseitige Spannungsversorgung oder Stromversorgung vorliegt oder Leitungsverluste kompensiert werden müssen. Das zweite Konvertierungselement 25 des zweiten Verbindungselements 20 weist weiterhin einen Analog-Digital-Wandler 8 (ADC) auf und eine hiermit verbundene weitere Mikroprozessoreinheit 6.2 zur Organisation des ADC 8. Die zweite, weitere Mikroprozessoreinheit 6.2 ist hierbei optional. Die gesamte Organisation der Datenströme und/oder Protokollumwandlung kann auch über nur eine Mikroprozessoreinheit 6 erfolgen. Insgesamt ist es aber von Vorteil, wenn in jedem Verbindungselement eine CPU vorhanden ist, die vorrangig die Daten der jeweiligen Anschlussseite, d.h. am Steckerende 19.1, 20.1, organisiert.

Die beiden Gleichstromwandler 2.1, 2.2 sind über die 2-drahtige Adergruppe 32 miteinander verbunden, während die beiden Mikroprozessoreinheiten 6.1, 6.2 über eine 1 bis 3-drahtige Adergruppe 31 verbunden sind. Die Anzahl der Adern der Adergruppe 31 ist abhängig von dem jeweiligen Systemprotokoll, wobei bei einem OneWire nur ein Draht bzw. Ader erforderlich ist, bei einer Universal Asynchronous Receiver Transmitter (UART) ist eine 2-Drahtverbindung erforderlich und bei einer Serial Peripheral Interface Schnittstelle (SPI Schnittstelle) können drei- oder vieradrige Verbindungen implementiert werden.

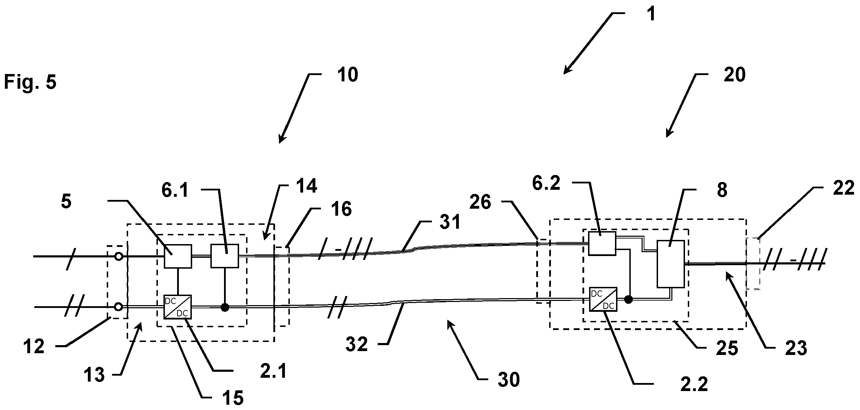

Schließlich zeigt die Fig. 5 ein zur Fig. 4 vergleichbares Ausführungsbeispiel, wobei das erste Verbindungselement 10 kein Kontaktelement 12 für einen CAN-Bus-Anschluss, sondern für einen Standard IOL, aufweist und auf der Konvertierungseinheit entsprechend einen IOL PHY 5 und ein standardisiertes 3-adriges Kontaktelement 12. Die Adergruppe 32 zwischen den Gleichstromwandlern 2.1, 2.2 ist ebenfalls 2-drahtig ausgelegt und bedarfsweise alleinig oder gemeinsam mit der 1 bis 3-drahtigen Adergruppe 31 abgeschirmt.

### Bezugszeichenliste

- 1: Adapterkabel
- 2: Spannungskonverter
2.1 Spannungskonverter, erster
2.2 Spannungskonverter, zweiter
2.3 Spannungskonverter, dritter
- 3: Schwingungskonverter
- 4: Systemkomponente, auch 4.1, 4.2
- 5: Physical Layer (PHY), auch SPE PHY
- 6: Mikroprozessoreinheit (CPU)
6.1 Mikroprozessoreinheit (CPU), erste
6.2 Mikroprozessoreinheit (CPU), zweite
- 7: Physical Layer (PHY), auch IOL PHY
- 8: Analog-Digital-Konverter (ADC)

- 10: Verbindungselement, erstes
10.1 Steckende
10.2 Kabelende
- 11: Steckerkörper, erster
- 12: Kontaktelement, erstes
- 13: Verbindungsleitung, vordere
- 14: Verbindungsleitung, hintere
- 15: Konvertierungseinheit, erste
- 16: Kabeleinführung, erste

- 20: Verbindungselement, zweites
20.1 Steckende
20.2 Kabelende
- 21: Steckerkörper, zweiter
- 22: Steckerkörper, zweiter
- 23: Verbindungsleitung, vordere
- 24: Verbindungsleitung, hintere
- 25: Konvertierungseinheit, zweite
- 26: Kabeleinführung, zweite

- 30: Verbindungskabel
- 31: Ader, Adergruppe (erste)
- 32: Ader, Adergruppe (zweite)
- A: Kommunikationssystem, erstes
- B: Kommunikationssystem, zweites
- C: Kommunikationssystem, drittes

## Patentansprüche

1. Adapterkabel (1) zur strom- und datenleitenden Verbindung von zwei elektronischen Systemkomponenten (4.1, 4.2) aus zwei unterschiedlichen Kommunikationssystemen (A, B), umfassend ein erstes Verbindungselement (10) und ein zweites Verbindungselement (20), die durch ein zwei- oder mehradriges Verbindungskabel (30) miteinander strom- und datenleitend verbunden sind, wobei beide Verbindungselemente (10, 20) jeweils
- einen Steckerkörper (11, 21),
- ein Kontaktelement (12, 22) und
- eine Kabeleinführung (16, 26) für das jeweilige Ende des Verbindungskabels (30) aufweisen, **dadurch gekennzeichnet, dass**
das erste Verbindungselement (10) eine erste Konvertierungseinheit (15) aufweist und das zweite Verbindungselement (20) eine zweite Konvertierungseinheit (25) aufweist, wobei
- die erste Konvertierungseinheit (15) des ersten Verbindungselementes (10) ausgelegt ist und entsprechende erste elektronische Bauteile umfasst, um einen ersten Teil der Daten- und/oder Leistungskonvertierung für mindestens eines der beiden Kommunikationssysteme (A, B) vorzunehmen und
- die zweite Konvertierungseinheit (25) des zweiten Verbindungselementes (20) ausgelegt ist und entsprechende weitere elektronische Bauteile umfasst, um den zweiten Teil der Daten- und/oder Leistungskonvertierung der Kommunikationssysteme (A, B) vorzunehmen.

2. Adapterkabel (1) nach Anspruch 1, **dadurch gekennzeichnet, dass** die erste und die zweite Konvertierungseinheit (15, 25) des ersten und des zweiten Verbindungselementes (10, 20) sich zum Zwecke einer vollständigen Daten- und/oder Leistungskonvertierung für zwei Kommunikationssysteme (A, B) komplementär ergänzen, insbesondere vollständig komplementär ergänzen.

3. Adapterkabel (1) nach einem der Ansprüche 1 oder 2, **dadurch gekennzeichnet, dass** zwischen die erste und die zweiten Konvertierungseinheit (15, 25) gemeinsam mit der Verbindungsleitung (30) ein drittes Kommunikationssystem (C) bilden, welches hinsichtlich Datenformat und/oder Leitungsart unterschiedliche ist zu dem ersten Kommunikationssystem (A) und dem zweiten Kommunikationssystem (B).

4. Adapterkabel (1) nach einem der vorherigen Ansprüche, **dadurch gekennzeichnet, dass** an oder in mindestens einem der Steckerkörper (11, 21) ein physikalischer Sensor angeordnet ist, welcher datenleitend mit einer der Konvertierungseinheiten (15, 25) und mindestens einem der dortigen elektronischen Bauteile verbunden ist, wobei die Messwerte und/oder -daten des physikalischen Sensors derart durch die Konvertierungseinheiten (15, 25) konvertierbar sind, dass diese an mindestens eines der Kommunikationssysteme (A, B) übermittelbar sind.

5. Adapterkabel (1) nach einem der vorherigen Ansprüche, **dadurch gekennzeichnet, dass** an oder in mindestens einem der Steckerkörper (11, 21) eine Datenerfassungseinheit angeordnet ist, welche datenleitend mit einer der Konvertierungseinheiten (15, 25) und mindestens einem der dortigen elektronischen Bauteile verbunden ist, wobei die gemessenen und erfassten Datenwerte der Datenerfassungseinheit derart durch die Konvertierungseinheiten (15, 25) konvertierbar sind, dass diese an mindestens eines der Kommunikationssysteme (A, B) übermittelbar sind.

6. Adapterkabel (1) nach einem der vorherigen Ansprüche, **dadurch gekennzeichnet, dass** das Kontaktelement (12, 22) des jeweiligen Verbindungselementes (10, 20) und/oder dessen Steckerkörper (11, 21) standardisiert und/oder normiert sind, gemäß dem jeweiligen Kommunikationssystem (A, B), wobei die Steckerkörper (11, 21) und die zugehörigen Kontaktelemente (12, 22) als Steckfinger oder Steckbuchse ausgebildet sind.

7. Adapterkabel (1) nach einem der vorherigen Ansprüche, **dadurch gekennzeichnet, dass**
- das ersten Konvertierungselement (15) des ersten Verbindungselementes (10) einen Stromkonverter (2) umfasst oder diesen darstellt, insbesondere einen Gleichstromkonverter (2.1), und einen Schwingungskonverter (3) umfasst und
- das zweite Konvertierungselement (25) des zweiten Verbindungselements (20) einen Datenkonverter umfasst oder diesen darstellt, insbesondere einen ersten Physical Layer (5) des ersten Kommunikationssystems (A) und einen zweiten Physical Layer (7) des zweiten Kommunikationssystems (B), und insbesondere eine hiermit verbundene und organisierende Mikroprozessoreinheit (6) umfasst.

8. Adapterkabel (1) nach Anspruch 7, **dadurch gekennzeichnet, dass** das zweite Konvertierungselement (25) des zweiten Verbindungselementes (20) einen weiteren (dritten) Spannungskonverter (2.2) umfasst, welcher mit dem Spannungsniveau des zweiten Kommunikationssystems (B) korreliert bzw. hiervon definiert wird, und wobei der weitere Spannungskonverter (2.2) mindestens zwei Adern (32) des Verbindungskabels (30) mit dem Spannungskonverter (2.1) des ersten Konvertierungselements (15) verbunden ist, insbesondere direkt verbunden ist.

9. Adapterkabel (1) nach einem der vorherigen Ansprüche, **dadurch gekennzeichnet, dass** mindestens eine Konvertierungseinheit (15, 25) einen Analog-Digital-Konverter (8) umfasst.

10. Verfahren zum Betrieb von elektronischen Systemkomponenten (4.1, 4.2) aus zwei unterschiedlichen Kommunikationssystemen (A, B), insbesondere zwei standardisierten Kommunikationssystem, wobei ein Adapterkabel (1) als Verbindungsleitung zwischen jeweils einer elektronischen Systemkomponente (4.1, 4.2) aus jeweils einer der beiden Kommunikationssysteme (A, B) vorgesehen ist, **dadurch gekennzeichnet, dass** ein Adapterkabel (1) nach einem der vorgenannten Ansprüche 1 bis 9 zur daten- und stromleitenden Verbindung vorgesehen wird.

11. Verfahren nach Anspruch 10, **dadurch gekennzeichnet, dass** (30) aufweisen, **dadurch gekennzeichnet, dass** ein erster Teil der Konvertierung der Signale an oder in dem ersten Verbindungselement (10) erfolgt und der zweite Teil der Konvertierung der Signale an oder in dem zweiten Verbindungselement (20) erfolgt.
